# EUROPEAN PATENT SPECIFICATION

(11) **EP 0 298 447 B1**
(45) Date of publication and mention of the grant of the patent: **05.04.1995**
(21) Application number: 88110784.1
(22) Date of filing: 06.07.1988
(51) Int. Cl.: G11B 7/013, G11B 7/26

(54) **Optical information recording medium**
Optisches Informationsaufzeichnungsmedium
Milieu d'enregistrement d'information optique

(30) Priority: 07.07.1987 JP 167842/87
(43) Date of publication of application: 11.01.1989
(73) Proprietor: Hitachi Maxell Ltd., Osaka-fu (JP)
(72) Inventor: Iida, Tamotsu, Tsuchiura-shi (JP); Hirose, Atsuki, Yuki-gun Ibaraki-ken (JP)
(74) Representative: Beetz & Partner Patentanwälte

(56) References cited:
- DE-A- 3 609 068
- GB-A- 2 058 434
- PATENT ABSTRACTS OF JAPAN vol. 4, no. 153 (P-33)(635) 25 October 1980,& JP-A-55 101143 (TEAC K.K.) 1 August 1980,
- PATENT ABSTRACTS OF JAPAN vol. 10, no. 298 (P-505)(2354) 9 October 1986 & JP-A-61113154 (SEIKO EPSON CORP) 31 May 1986
- PATENT ABSTRACTS OF JAPAN vol. 8, no. 48 (P-258)(1485) 3 March 1984,& JP-A-58 199448 (SONY K.K.) 19 November 1983,

## Description

The present invention is generally concerned with an optical information recording medium which is exposed to or irradiated with a light beam to record/read information, and it particularly relates to an optical information recording medium as defined in the preamble of the appended claim 1.

With an optical information recording medium of the type mentioned above, which may be a write once type optical disc or an erasable type optical disc, an information signal, which may for example consist of an information signal and an address signal, is recorded in the form of pits, which may be concavities or openings, on one surface of a substrate, which may for example be made of glass or hard plastics, and the recorded information signal can be read by optically detecting the thus generated pattern of pits.

GB-A-2 058 434 discloses such an optical information recording medium in which recording pits are formed by impinging a laser beam on a recording surface of a suitable substrate. The said known recording medium is designed to generate a structure in which the lateral track separation may be reduced without increasing the crosstalk. For the said purpose the reading beam polarisation is made different between adjacent tracks changing from parallel polarisation to perpendicular polarisation and vice versa. Furthermore, to realize the said purpose together with the said reading light polarisation, angles ϑₜ and ϑᵣ, which are defined as angles between front, rear and side walls of a pit bottom plane and a vertical line positioned thereto and stand for a tangential angle of inclination and for a radial angle of inclination respectively, are adjusted to a certain range.

The present invention has for its object to provide an optical information recording medium by which good reading characteristic and high recording density can be attained.

The said object is achieved in accordance with the invention by means of an optical information recording medium structure as defined in the appended claim 1. An advantageous further development of the invention is defined in claim 2.

For better understanding the invention reference is now made to the drawings in which:

Figure 1 is a diagram for explaining the relation between a recording signal and pits formed in an optical information recording medium.

Figures 2A and 2B are perspective views useful in explaining the principle of reading the optical Information recording medium.

Figure 3 is a graph showing changes in intensity of exposure of photoresist obtained when a light spot of constant intensity is traced at a constant linear velocity.

Figure 4 illustrates a graphic representation showing an irradiation characteristic obtained with a constant peak power level of an irradiation beam and a prior art pit formed under the irradiation.

Figure 5 is a fragmentary sectional view illustrating the shape of the opposing side walls of a pit formed in the prior art optical information recording medium.

Figure 6 is a fragmentary sectional view illustrating the shape of the front wall surface and rear wall surface of the pit formed in the prior art optical information recording medium.

Figure 7 is a plan view showing the plan configuration of the prior art pit.

Figure 8 is a graph showing the relation between disc radius and exposure intensity in the prior art exposure.

Figure 9 is a graph showing a characteristic of a reading signal generated from the prior art pit.

Figure 10 is a plan view showing the plan configuration of a prior art pit having the pit length smaller than the reading light spot.

Figure 11 is a fragmentary sectional view, as seen in the light beam scanning direction, showing a pit formed in an optical information recording medium according to the invention.

Figure 12 is a fragmentary sectional view showing the sectional configuration of the Fig. 11 pit as seen in a direction perpendicular to the light beam scanning direction.

Figure 13 is a fragmentary plan view showing an example of the plan configuration of pits according to the invention.

Figure 14 is a fragmentary plan view showing another example of pits according to the invention.

Figure 15 is a fragmentary plan view showing an example of the plan configuration of a pit having the pit length smaller than the reading light spot diameter.

Figure 16 is a perspective view illustrating the overall construction of an optical disc master cutting apparatus.

Figure 17 is a diagrammatic representation for explaining the principle of a A-O (acoustic-optical) optical modulator.

Figure 18 is a perspective view for explaining the principle of an E-O (electrical-optical) optical modulator.

Figure 19 illustrates a graph showing the relation between the rise and fall edges of a recording signal and intensity of a light beam irradiated on an optical disc and a graph showing the relation between the rise and fall edges of the recording signal and the amount of exposure of photoresist.

Figure 20 illustrates a graph showing an irradiation characteristic obtained when the peak value of irradiation beam is changed.

Figure 21 is a plan view showing an embodiment in which the invention is applied to an optical card.

Before detailedly describing preferred embodiments of the present invention some problems generally occurring with optically information recording shall be explained.

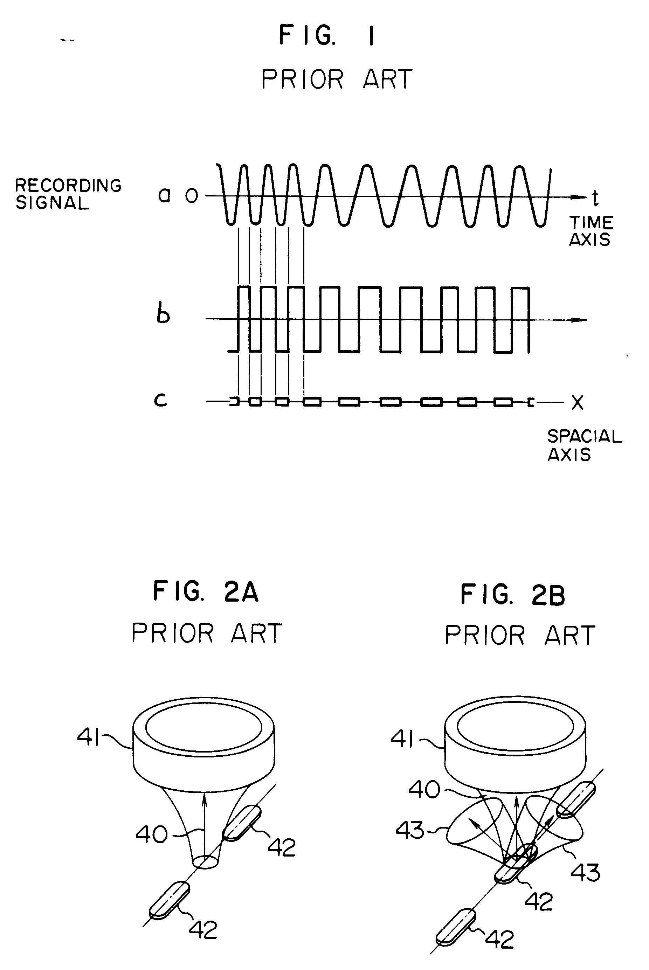

For the said purpose, in Fig. 1 an optical information recording medium is shown which has a recording surface in which pits c are formed in succession, each having the front edge of prepit (hereinafter simply referred to as the front edge) and the rear edge of prepit (hereinafter after simply referred to as the rear edge) which respectively correspond to the rise phase and the fall phase of a limiter waveform b obtained by processing a recording signal a through a limiter. The difference in intensity between reflection beams generated from a pitted area and a not-pitted area when a light beam for reading is irradiated along the pit array is utilized to detect the front and rear edges of a pit and a resulting signal is processed to a limiter waveform which represents a readout recording signal or reading signal. To describe this operation in greater detail, a reading light beam 40 impinging upon a not-pitted area undergoes total reflection at a reflection film (not shown) formed on the back of the optical information recording disc and all of the flux of light is returned to within the aperture of an objective lens 41, as shown in Fig. 2A. On the other hand, when the reading light beam 40 impinges upon a pitted area or a pit 42, it is diffracted by the pit 42 to create diffraction beams 43 having a large reflection angle and most of the diffraction beams deviate from the aperture of the objective lens 41, as shown in Fig. 2B, with the result that the quantity of light flux returning to the objective lens 41 is decreased. A decrease in the quantity of light flux returning to within the aperture of the objective lens 41 is enhanced by the interference by the pit 42. Changes in the quantity of light are detected by detectors such as photodiodes so that the presence or absence of pits 42 and their varying lengths can be detected to thereby read information recorded on the optical information recording medium.

The light quantity of reflection beam from the pitted area is related to the size of pit. Where the refractive index of the substrate is nₗ and the wavelength of the reading light beam is λ, the difference between light quantities of the reflection beams respectively generated from a pit and a land area (an area other than a pitted area) becomes maximum when the depth of the pit is mλ/4nₗ (where m is integer), the pit length is larger than the diameter of a reading light spot and the pit width equals about 1/3 of the diameter of the reading light spot, though this conclusion being not substantiated by detailed calculation herein. The maximum difference is effective to provide a reading signal of the highest CN ratio.

Incidentally, such an optical information recording medium is duplicated, by transfer technique, from a master formed with recesses and raises which are substantially congruent with pits to be formed in the optical information recording medium. A known way to form the recesses and raises or cut the pits in the master is such that while the master coated, on its surface, with photoresist in uniform thickness is being driven, a light beam modulated with a given recording signal is irradiated on the master from a cutting head opposing the master to form a pattern of pits in the photoresist which corresponds to a pattern of irradiation of the light beam.

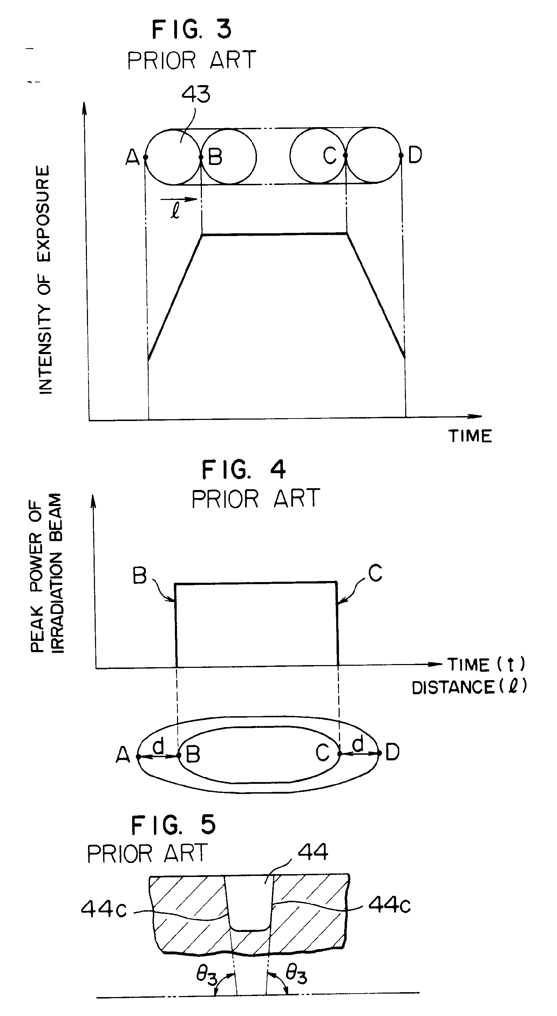

Assuming that the intensity distribution of beams of light within a light spot is uniform, the amount of exposure of the photoresist is proportional to the product of intensity and irradiation time of the light beam for cutting. Accordingly, when the cutting light beam of constant intensity is traced on the photoresist layer at a constant linear velocity, a light spot 43 is irradiated on a start area of exposure A instantaneously for a short irradiation time of provide a small amount of exposure of photoresist at that area and as the light spot 43 moves from the area A, the irradiation time is prolonged in proportion to a moving distance ℓ of the light spot 43 to increase the amount of exposure of the photoresist linearly. After an area B spaced apart from the area A by a spot diameter d of the light spot 43, the light beam is irradiated on the photoresist during an interval of time corresponding to passage of the light spot 43 between the end of the front spot and the beginning of the rear spot, thereby providing a constant amount of exposure of the photoresist. Near an end area of exposure D caused by the light spot 43, the amount of exposure becomes maximum at an area C spaced apart from the end area of exposure D by the spot diameter d of the light spot 43 and within a region starting from the area C and covering the spot diameter d of the light spot 43, the irradiation time decreases in proportion to the distance from the end area of exposure D with the result that the amount of exposure of the photoresist decreases linearly. Consequently, through the above procedure, a pit having a shape as shown in Fig. 4 can be prepared.

Actually, however, the intensity distribution within the light spot 43 is not uniform to assume a Gaussian distribution in which the intensity is large at the center and decreases toward the peripheral edge and therefore the decrease in the amount of exposure of the photoresist is accelerated at the start area A and end area D of exposure caused by the light spot 43.

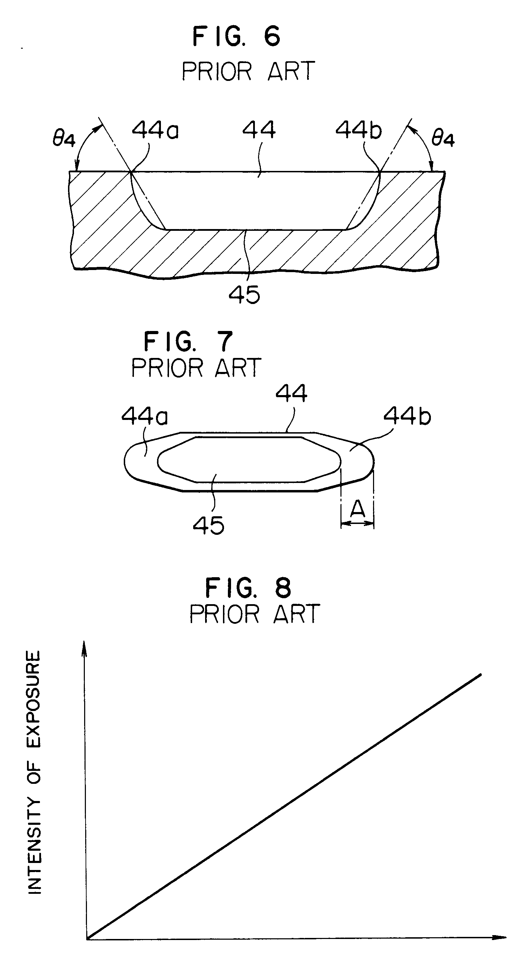

The size and depth of a pit cut in the photoresist are substantially proportional to the amount of exposure caused by the light beam irradiating the photoresist. Accordingly, when the exposure amount is small at the exposure start area and exposure end area and is large within the intermediate region as described above, a pit 44 taking place after development of the photoresist has a sectional configuration in which the opposing side walls, 44c, of the pit 44 are steep (ϑ₃ = 60 to 70 degrees) as shown in Fig. 5 and the front edge 44a and rear edge 44b of the pit 44 are of a loose shape (ϑ₄ = 45 to 53 degrees) as shown in Fig. 6. The pit 44 has therefore a plan configuration as shown in Fig. 7 in which the intermediate portion of the pit 44 has the width of prepit being wide, the front edge 44a and rear edge 44b have each the with of prepit being narrow and the bottom 45, of the pit 44 at a predetermined depth from the. surface of the photoresist has the length which detracts from the contour of the opening by A reflecting the loose shape of the front and rear edges 44a and 44b and measuring 0.09 to 0.11 »m.

In preparing a master adapted for an optical information recording medium of a write once type optical disc or an erasable type optical disc which is operated at a constant angular velocity to record and read information the cutting head is gradually moved from the inner circumference to the outer circumference of the master to carry out exposure of photoresist on the master being driven to rotate at the constant angular velocity. In this operation, the peripheral velocity or linear velocity of the master is larger at the outer circumference than at the inner circumference and if the light beam is irradiated at constant intensity irrespective of any radial area of prepit cutting, the amount of exposure of the photoresist decreases in proportion to an increase in the linear velocity, thus raising a problem that the width of a pit to be formed becomes narrow.

Conventionally, in order to prevent such inconvenience a cutting method has been employed wherein as graphically shown in Fig. 8, the intensity of the light beam is gradually increased in proportion to the distance between the rotation center of the substrate and a position on which the light spot is irradiated. By this method, a pit having a substantially constant width can be formed regardless of any radial area of prepit cutting.

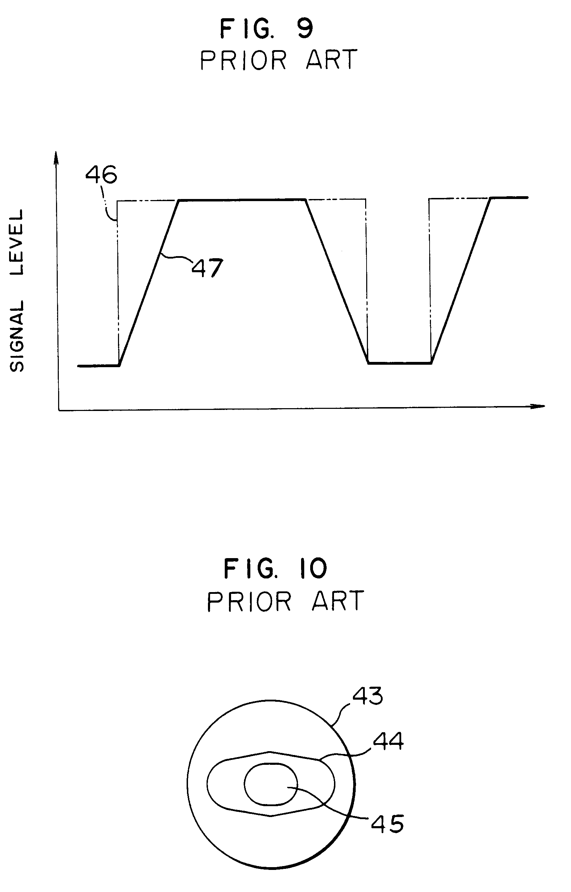

As described previously, the difference between light quantities of reflection became of reading light beam respectively generated from a pit area and a land area, that is, the CN ratio of a read-out signal becomes maximum when a pit is so formed as to have specified values of width and depth. It therefore follows that when the depth of a pit gradually increases in the scanning direction of the reading light beam as shown in Fig. 6, a waveform 47 of a read-out signal has, as shown in Fig. 9, the rise edge and fall edge of a loose shape as compared to an ideal pulse waveform 46. This leads to a problem that the read-out signal is increased in jitter.

Especially where a pit 44 has the pit length which is smaller than the reading light spot diameter as shown in Fig. 10, a reading light spot 43 is occupied with the pit 44 by a smaller area than an area by which the reading light spot is occupied with a pit having the pit length larger than the reading light spot diameter, with the result that not only the read-out signal level is decreased but also the area of bottom 45 for generation of the highest read-out signal level becomes smaller, thus raising a problem that stable reading of information becomes difficult to achieve.

If the photoresist is exposed to a cutting light beam of high intensity, the shape of front edge 44a and rear edge 44b of the pit 44 can be made to be steep to solve the problem that the rise and fall of read-out signal corresponding to the front edge 44a and rear edge 44b of the pit have a loose shape. However, when the cutting light beam of high intensity is continuously irradiated between the exposure start area A and the exposure end area D, the width of the intermediate portion of pit becomes larger than the width optimized for the reading light spot diameter and there result problems that the CN ratio is degraded and that contradiction to the technical task of compacting the pits and improving the recording density takes place.

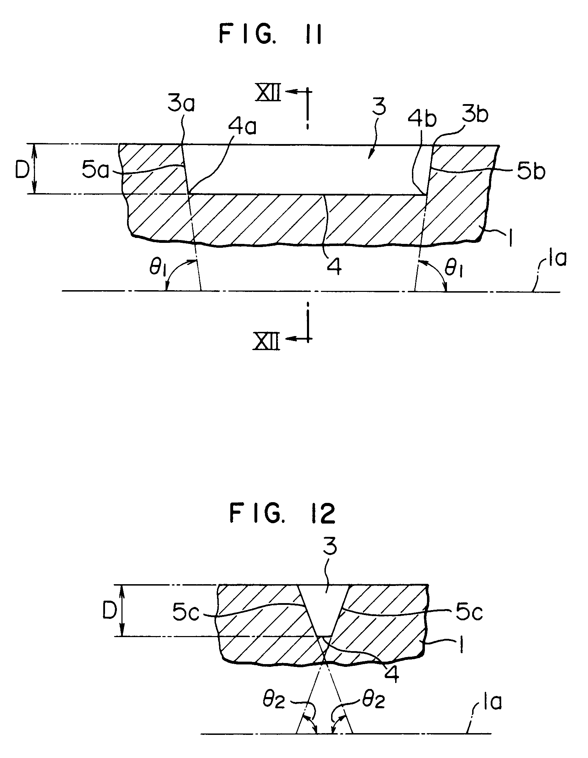

Referring now to Figs. 11 to 15, there is illustrated an embodiment of an optical information recording medium according to the invention in which reference numeral 1 designates a substrate, 2 an array of pits patterned in accordance with a recording signal and 3 individual pits constituting the pit array 2.

The substrate 1 may be made of, for example ceramics such as glass and mica, plastics such as polycarbonate, polymethyl methacrylate, polymethyl pentane and epoxy or metal such as aluminum alloy. The substrate 1 may be formed with the pit array 2 through a transfer process suitably adapted for the material of the substrate. For example, when the substrate 1 is made of ceramics or metal, a so-called 2P method may suitably be adopted wherein ultraviolet ray hardening resin is expanded between a mold called a stamper formed with an inverted pattern of a signal pattern desired to be transferred to the substrate 1, and the ultraviolet ray hardening resin with the transferred signal pattern is bonded to the substrate 1. When the substrate 1 is made of thermoplastic plastics such as polycarbonate or polymethyl methacrylate, an injection molding method may suitably be adopted wherein molten plastics is injected into a mold having the half of cavities which has the form of the stamper. Further, when the substrate 1 is made of thermosetting plastics such as epoxy, a casting method may suitably be adopted wherein liquid plastics is teemed into a mold having the half of cavities which has the form of the stamper.

As will be seen from Figs. 11 and 12, an individual pit 3 constituting the pit array 2, an angle ϑ₁ subtended by a front wall surface 5a of pit 3 extending from a front edge 3a of pit 3 on the opening plane (one of planes contouring the pit 3 which is opposite to the substrate 1) to reach a front edge 4a of pit 3 on bottom plane 4 and a pit forming plane 1a of the substrate 1 and an angle, also designated by ϑ₁, subtended by a rear wall surface 5b of the pit extending from a rear edge 3b of pit 3 on the opening plane to reach a rear edge 4b of pit 3 on the bottom plane and the pit forming plane 1a of the substrate 1 are respectively made to be larger than an angle ϑ₂ subtended by each of the opposing side wall surfaces 5c at a central portion 3c of pit 3 extending in the light beam scanning direction and the pit forming plane 1a of the substrate 1. In this case, the angle ϑ₁ subtended by the front wall surface 5a of the pit 3 and the pit forming plane la of the substrate 1 or by the rear wall surface 5b of the pit 3 and the pit forming plane la of the substrate 1 is preferably closer to 90 degrees from the standpoint of jitter reduction but practically, the angle ϑ₁ measuring 60 to 80 degrees is satisfactory. The angle ϑ₂ subtended by the side wall surface 5c of the pit and the pit forming plane 1a of the substrate 1, on the other hand, is simply required to cause the photodetector to detect data representative of continuity of the side wall and practically the angle ϑ₂ measuring about 45 to 56 degrees is satisfactory.

The depth D of the pit 3 measures mλ/4nₗ (m being integer) with the view of maximizing the reading signal level, where λ represents the wavelength of the reading light beam and nₗ the refractive index of the substrate 1 (assumed to be a transparent substrate).

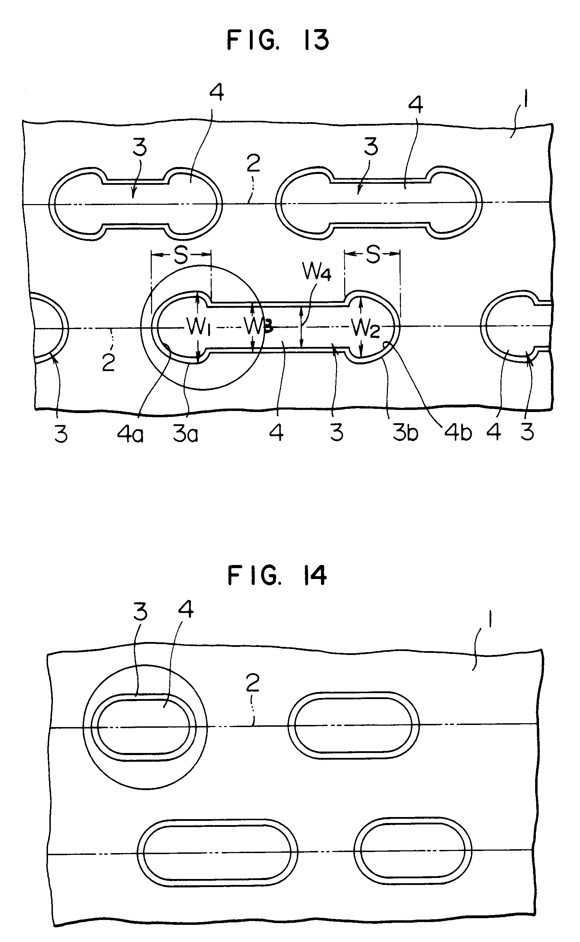

To describe the plane configuration of the pit 3, the front and rear edges of the pit 3 may be wider than the intermediate portion of the pit 3, as shown in Fig. 13, for the sake of emphasizing the front and rear edges, or the width of the pit 3 may be made to be substantially uniform throughout the front edge, intermediate portion and rear edge, as shown in Fig. 14. In any case, the front wall surface 5a, rear wall surface 5b and side wall surface 5c of the pit 3 are slant and therefore, when observing the substrate 1 in its plan view, the bottom surface 4 of the pit 3 is so viewed as to be inside the contour of the opening of the pit 3.

The width of the pit 3 is about 1/3 of the reading light spot diameter to ensure that the level of the reading signal generated from the pit 3 can be maximized. In this case, the plan configuration of the pit 3 as viewed on the opening plane and bottom plane may be determined as described above. Especially where the plane configuration of the pit has the form shown in Fig. 13, the width of the wider front and rear edges may be about 1/3 of the reading light spot diameter or alternatively the width of the narrower intermediate portion may be about 1/3 of the reading light spot diameter. Particularly, with the view of maximizing the reading signal level and the recording density of information, the width, as viewed on the bottom plane of the pit 3, of the front and rear edges may most preferably be about 1/3 of the reading light spot diameter.

A pit having the plan configuration as shown in Fig. 13 and to which a 1.6 »m reading light spot is applied has dimensions exemplified as follows:
W₁ = 0.52 to 0.58 »m
W₂ = 0.40 to 0.44 »m
W₃ = 0.52 to 0.55 »m
W₄ = 0.35 to 0.38 »m
S = 0.35 to 0.45 »m
where W₁ represents the width of front and rear edges 3a and 3b on the opening plane, W₂ the width of front and rear edges 3a and 3b on the bottom plane, W₃ the width of central portion 3c on the opening plane, W₄ the width of central portion 3c on the bottom plane and S the length of the front edge 3a or rear edge 3b.

The length of the pit 3 may be larger than the reading light spot or alternatively it may be smaller than the reading light spot d, as shown in Fig. 14, in order to increase the recording density. In the latter case, coexistence of pits having the length larger than the reading light spot diameter and pits having the length smaller than the reading light spot diameter may be realized in a single recording medium.

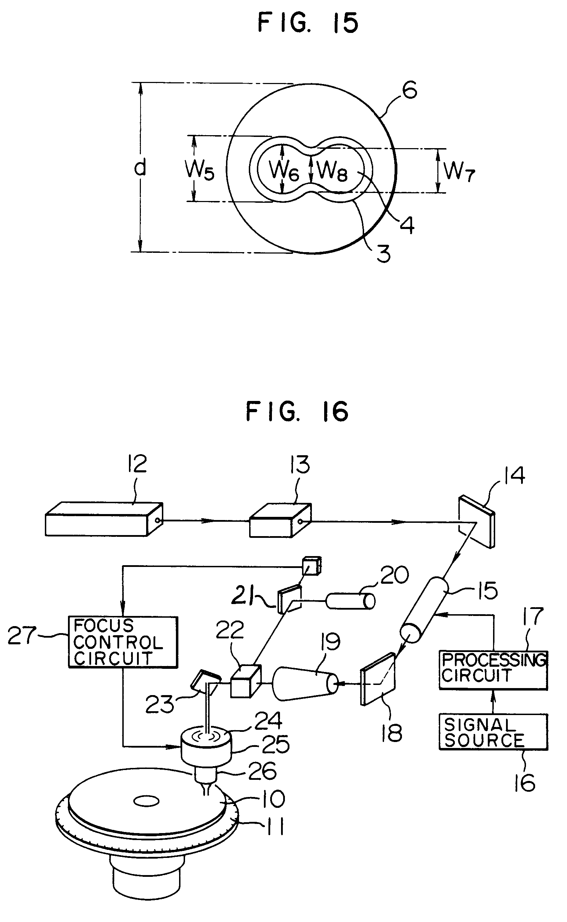

Obviously, in the pit 3 having the shorter pit length than the reading light spot diameter d, the angle ϑ₁ subtended by the front wall surface 5a of pit 3 and the pit forming plane 1a of substrate 1 or by the rear wall surface 5b of pit 3 and the pit forming plane 1a of substrate 1 is also made to be larger than the angle ϑ₂ subtended by the side wall surface 5c of pit 3 and the pit forming plane la of substrate 1. The pit 3 has the depth D which is λ/4nₗ. The plan configuration of the pit 3 may be modified to take the shape of a gourd as shown in Fig. 15. The plan configuration of Fig. 14 will be particularly defined by describing that the front and rear edges of the individual pattern pits are each formed into an arc and the radius of the arc is made to be substantially equal to the distance between the center line in the longitudinal direction of the individual pits and the line parallel to the center line and contouring the edge of each of the opposing side wall surfaces of the individual pits, or that the distance between the contour of the opening of each pit on the opening plane and the contour of the bottom surface of each pit on the bottom plane at the front and rear edges of each pit nearly equals that distance associated with each of the opposing side walls of each pit.

Given the pit width being identical, a pit 3 having the pit length smaller than the reading light spot diameter d occupies the reading light spot 6 at a smaller ratio than a different pit 3 having the pit length larger than the reading light spot diameter and with the former pit 3, the amount of reflection beams incident upon the photodetector is decreased to thereby decrease the reading signal level. To prevent this disadvantage, it is preferable that the width of the pit having the pit length smaller than the reading light spot diameter d be made to be larger in inverse proportion to the pit length, thereby making the occupation ratio of this pit within the reading light spot 6 substantially equal to that of the pit having the pit length larger than the reading light spot diameter.

In this case, the width, on the opening plane of pit, of the front and rear edges of the pit having the pit length smaller than the reading light spot diameter d may be larger than that of the front and rear edges of the pit having the pit length larger than the diameter of reading light spot 6. In an alternative, the width, on the bottom plane of pit, of the front and rear edges of the pit having the pit length smaller than the reading light spot diameter d may be larger than that of the front and rear edges of the pit having the pit length larger than the diameter of the reading light spot. In a further alternative, the width, on the opening plane of pit, of the central portion (extending longitudinally or in the light beam scanning direction) of the pit having the pit length smaller than the reading light spot diameter may be larger than that of the central portion of the pit having the pit length larger than the diameter of the reading light spot. In a still further alternative, the width, on the bottom plane of pit, of the central portion of the pit having the pit length smaller than the reading light spot diameter may be larger than that of the central portion of the pit having the pit length larger than the diameter of the reading light spot.

A pit having the plan configuration as shown in Fig. 15 and to which a 1.6 »m reading light spot is applied has dimensions exemplified as follows:
W₅ = 0.52 to 0.58 »m
W₆ = 0.40 to 0.44 »m
W₇ = 0.48 to 0.58 »m
W₈ = 0.36 to 0.44 »m
where W₅ represents the width of front and rear edges 3a and 3b on the opening plane, W₆ the width of front and rear edges 3a and 3b on the bottom plane, W₇ the width of the central portion on the opening plane and W₈ the width of the central portion on the bottom plane.

In this manner, the area, on the opening plane or bottom plane of pit, of the pit having the pit length smaller than the reading light spot can be made to be comparable to the area by which the pit having the pit length larger than the diameter of reading light spot occupies the reading light spot on the opening plane of the pit.

With the optical information recording medium of the previous embodiment, since the angle ϑ₁ subtended by the front wall surface 5a of pit 3 and the pit forming plane 1a of substrate 1 or by the rear wall surface 5b of pit 3 and the pit forming surface la of substrate 1 is made to be sharp, the rise and fall edges of the read-out signal generated from the pit 3 can be steep and jitter of the read-out signal can be reduced. Further, since the information can be read at high CN ratio and with low jitter even from the pit having the pit length smaller than the reading light spot diameter, compactness of bits can be realized to improve the recording density.

While in the foregoing embodiment the optical information recording medium has been described as being removed of pregrooves (guide grooves) corresponding to tracking information, the present invention is not limited thereto but may be applied to an optical information recording medium having the pregrooves in exactly the same manner. Also, the foregoing embodiment has been described by referring to the so-called full height cutting optical information recording medium in which the bottom surfaces of pit 3 are formed at an equal depth but the invention is not limited thereto and is applicable in the same manner to an optical information recording medium wherein in cutting the master, the thickness of photoresist is made to be sufficiently larger than the effective exposure layer under the irradiation of the cutting light beam so as to provide curved bottom surfaces of pits.

The width of the front and rear edges 3a and 3b of pit 3, the slant angle of the front and rear wall surfaces 5a and 5b of pit 3, the width of the central portion 3c of pit 3 and the slant angle of the side wall surface 5c of pit 3 can be adjusted by adjusting the amount of exposure of photoresist (intensity of light) in the course of cutting the optical disc master. By referring to an optical disc as an example, an example of a master cutting apparatus and pit exposure method using the apparatus will now be described.

Fig. 16 is a perspective view illustrating the overall construction of the master cutting apparatus. As shown, the apparatus for cutting a master 10 comprises a turntable 11, a first light source 12, an A-O optical modulator 13, a reflector 14, an E-O optical modulator 15, a source 16 for supplying a recording signal applied to the E-O modulator 15, a processing circuit 17 for the recording signal from the source 16, a reflector 18, a beam expander 19, a second light source 20, a half mirror 21, a beam combining prism 22, a reflector 23, a cutting head 24, a focus actuator 25 attached to the cutting head 24, an objective lens 26 attached to the cutting head 24, and a focus control circuit 27 for controlling the focus actuator.

The first light source 12 is used for exposure of photoresist coated on the optical disc master 10, and the second light source 20 for emitting light of a wavelength which is outside of an optical sensitivity region of the photoresist is used for auto-focusing of the focus actuator 25.

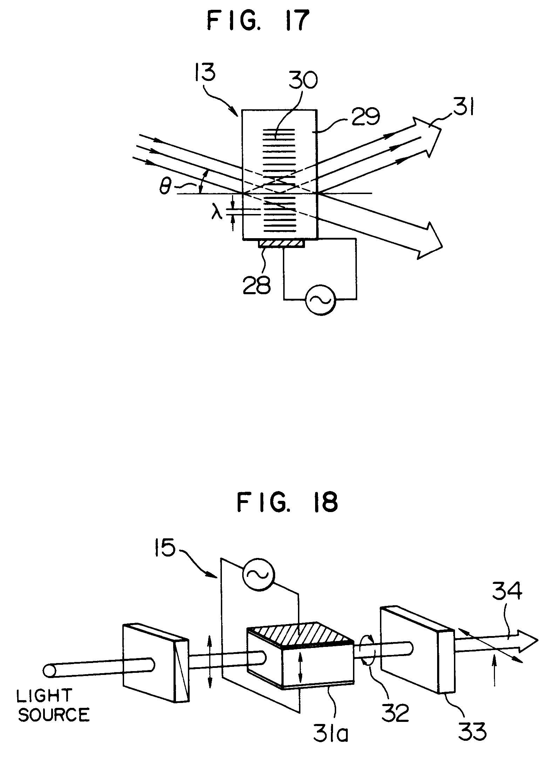

As shown in Fig. 17, the A-O optical modulator 13 includes a piezoelectric element 28 made of, for example, LiNbO₃ and which is applied with a voltage of frequency f to generate a compressional wave 30 of wavelength λ in a medium 29 made of, for example, TeO₂ or PbMoO₄. The compressional wave 30 acts as a diffraction grating by which the signal wave is diffracted. Since the voltage for driving the ultrasonic wave is modulated in amplitude, a modulated beam 20 can be obtained. Accordingly, by amplitude modulating the ultrasonic wave drive voltage in the A-O optical modulator 13, the amount of exposure of the photoresist formed on the optical disc master 10 can be adjusted.

As shown in Fig. 18, the E-O optical modulator 15 utilizes a phenomenon that a Pockels cell 31a applied with a voltage causes anisotropy relative to the major axis of index ellipsoid of the crystal so that there occurs, between two linear polarizations travelling through the crystal, the difference in phase velocity which is proportional to intensity of the electric field. Thus, an elliptical polarization 32 from the Pockels cell 31a is delivered through an analizer 33 to provide an amplitude modulated beam 34.

The beam expander 19 is a kind of collimator and operable to expand the beam diameter to such an extent that the beam is incident upon the full size of aperture of the objective lens 26 attached to the cutting head 24.

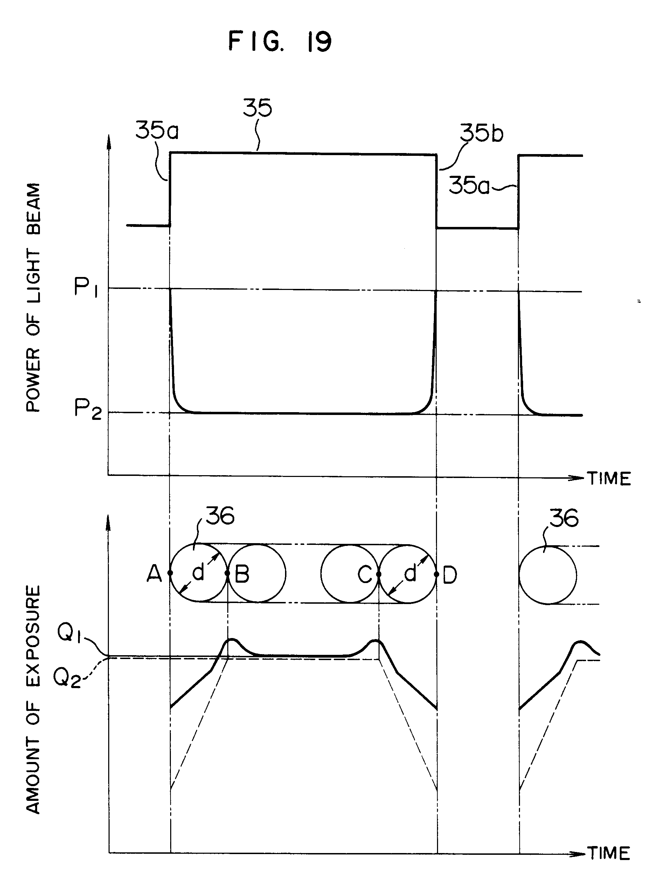

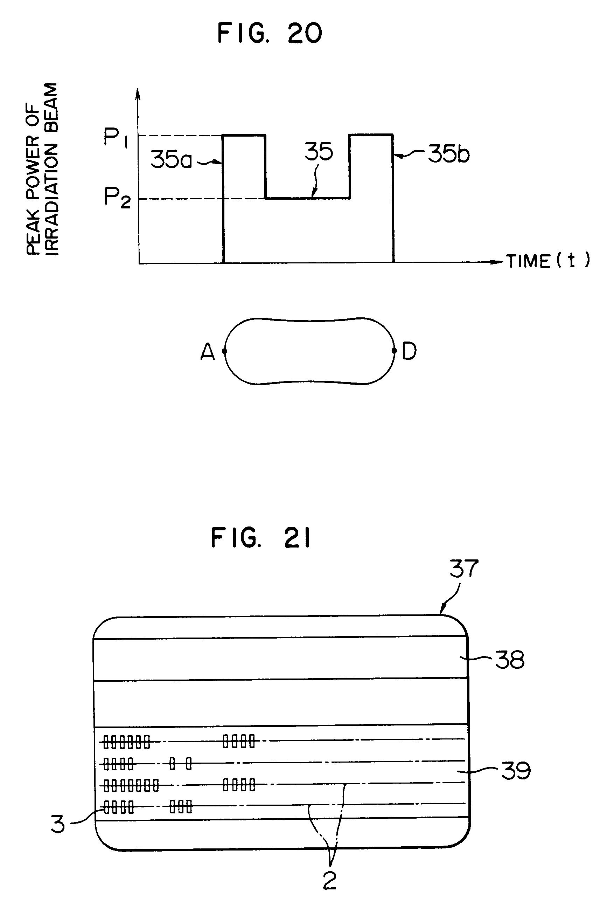

When cutting the master of optical disc with the cutting apparatus, the turntable 11 is driven for rotation to rotate the no written optical disc master 10 at a constant angular velocity and the beam is irradiated on the photoresist formed on the surface of no written optical disc master 10 at requisite intensity obtained by amplitude modulating the ultrasonic wave drive voltage in the A-O optical modulator 13. More specifically, as shown at the upper part of Fig. 19 and in Fig. 20, the photo-resist is cut by irradiating the light beam, instantaneously at intensity P₁, on the start area of exposure A by light beam corresponding to the rise edge 35a of recording signal 35, then irradiating the light beam, at intensity P₂ which is decreased from the initial light beam intensity P₁ immediately after the initial irradiation, on a portion of the photoresist between the rise edge 35a and fall edge 35b of the recording signal, and finally irradiating the light beam, at the same intensity as the initial light beam intensity P₁, on the end area of exposure D by light beam corresponding to the fall edge 35b of the recording signal. The intensity P₁ of the initial light beam irradiation and the intensity P₂ of the intermediate light beam irradiation are adjusted such that the amount of exposure of the photoresist layer at area B spaced apart by a spot diameter d from the start area of exposure A by light spot 36 and the amount of exposure of the photoresist layer at area C spaced apart by the spot diameter d from the end area of exposure D by light spot 36 are sufficient to cut a pit of a predetermined width. For example, in case where a pit is desired to be formed in photoresist so as to have the same width as that of a different pit which is formed in photoresist of the same sensitivity by tracing the light beam of constant intensity at a constant linear velocity to irradiate the photoresist, the amounts of exposure, Q₁, of the photoresist layer at the area 3 spaced apart by the spot diameter d from the start area of exposure A by light spot 36 and at the area C spaced apart by the spot diameter d from the end area of exposure D by light spot 36 are so adjusted as to substantially equal the amounts of exposure, Q₂, of the photoresist obtained at the corresponding areas when the light beam of constant intensity is traced at the constant linear velocity.

In cutting a pit having the pit length smaller than the reading light spot diameter, it is necessary that the width of this pit be larger than that of a different pit having the pit length larger than the reading light spot diameter and hence the light beam of higher intensity is irradiated on photoresist by using a similar exposure means to the above.

In the above exposure method, the amount of exposure due to the initial light beam irradiation is added to the amount of exposure due to tracing of the light beam of intensity P2 over the spot diameter d, at the area B spaced apart by the light spot diameter d from the start area of exposure A by light spot and at the area C spaced apart by the light spot diameter d from the end area of exposure D by light spot. Consequently, the amount of exposure of the photoresist is increased to ensure formation of the front and rear edges 3a and 3b featuring a wide width and the front and rear wall surfaces 5a and 5b featuring a sharp slant angle. Conversely, the intermediate portion between the areas B and C is irradiated with the light spot of lower intensity to undergo a smaller amount of exposure and consequently have a narrower pit width. By adjusting the initial intensity P1 and intermediate intensity P2 of the light beam such that at the area B spaced apart by the spot diameter d from the start area of exposure A by light spot, the amount of exposure Q₁ substantially equals the amount of exposure Q₂ obtained when the light beam of constant intensity is traced at the constant linear velocity, the width of the front and rear edges 3a and 3b can be made to be substantially equal to the pit width of a pit formed by tracing the light beam of constant intensity at the constant linear velocity and no decrease in the recording density occurs. The amount of exposure for the formation of the central portion 3c of pit 3 equals the difference between the amount of exposure, Q₂, at the start area of exposure A by light spot and the amount of exposure Q₁ at the area B spaced apart by the light spot diameter d from the area A.

The optical information recording disc of the present invention is duplicated by the transfer technique from the optical disc master formed with pits by exposure process as described above.

Essentially, the present invention features making sharp the sectional configuration of the front and rear edges of the pit and within the framework of the invention, by suitably adjusting the intensity of the light beam used for the formation of the intermediate portion between the start area of exposure A and end area of exposure D by light beam, the side wall surface of a pit 3 may be slanted at the same degree as the front and rear wall surfaces of the pit 3 and the width of the intermediate portion 3c of pit 3 may be made to be equal to the pit width at the area B spaced apart by the spot diameter d from the start area of exposure A and at the area C spaced apart by the spot diameter d from the end area of exposure D.

The optical information recording medium of this invention may be applied, in addition to the optical disc, to desired types such as an optical card and an optical tape. Fig. 21 is a plan view illustrating an example of optical card. As shown, an optical recording stripe 39 parallel with a magnetic stripe 38 is formed in the longitudinal direction of a card body 37, and pit arrays 2 are formed in the optical recording stripe 39. The plan configuration of a pit 3 may be of a rectangle as exemplified herein or alternatively an ellipse which extends in a direction perpendicular to the scanning direction of the reading light beam.

Obviously, the cutting apparatus is not limited to the type described hereinbefore for the illustration purpose only but desired types of known cutting apparatus may be employed. In cutting a pit 3 in the form of a rectangle or ellipse extending in the direction perpendicular to the reading light beam scanning direction as shown in Fig. 21, the recording light beam having the spot shape of a rectangle or an ellipse extending in the direction perpendicular to the scanning direction may be used.

As described above, since in the optical information recording medium according to the invention, an angle subtended by the front wall surface of a pit and the pit forming plane of the substrate and an angle subtended by the rear wall surface of the pit and the pit forming plane of the substrate are respectively made to be larger than an angle subtended by the side wall surface of the pit and the pit forming plane of the substrate, the rise and fall edges of a read-out signal generated from the pit can be sharp and jitter of the read-out signal can be decreased. Further, since the width of a pit having the pit length smaller than the reading light spot diameter is made to be larger than that of a pit having the pit length larger than the reading light spot diameter, the CN ratio of a reading signal generated from the former pit can be improved and information similar to that read out of the latter pit can be read from the former pit. Accordingly, compactness of pits can be realized to improve the recording density.

## Claims

1. An optical information recording medium comprising a substrate (1) having in one surface thereof formed a pit array (2) including individual pits (3) patterned in accordance with a recording signal for reproducing said recording signal by irradiating a light beam spot to said pits, a central line at the central portion of a front edge (4a) and a rear edge (4b) of said individual pits (3) being parallel to a light beam spot scanning direction, first angles (ϑ₁) being subtended between a pit forming plane (1a) of said substrate (1) on the one hand and a front wall surface (5a) and a rear wall surface (5b) respectively of individual pits (3) on the other hand and second angles (ϑ₂) being subtended by each of the opposing side wall surfaces (5c) at a central portion (3c) of said individual pits (3) extending in said light beam spot scanning direction and said pit forming plane (1a),
characterised in
that said first angles (ϑ₁) are made to be larger than said second angles (ϑ₂).

2. An optical information recording medium according to claim 1,
characterised in
that said first angle (ϑ₁) as subtended by said front wall surface (5a) of said individual pits (3) and said pit forming plane (1a) of said substrate (1) and as subtended by said rear wall surface (5b) of said individual pits (3) and said pit forming plane (1a) of said substrate (1) are made to be 60 to 90°.

## Patentansprüche

1. Optisches Informationsaufzeichnungsmedium, das ein Substrat (1) umfaßt, wobei in einer der Oberflächen des Substrats ein Pitfeld (2) ausgebildet ist, das einzelne Pits (3) enthält, die entsprechend einem Aufzeichnungssignal in einem Muster angeordnet sind, um das Aufzeichnungssignal durch Strahlen eines Lichtstrahlflecks auf die Pits wiederzugeben, wobei eine Mittellinie, die im Mittelabschnitt einer Vorderkante (4a) und einer Hinterkante (4b) der einzelnen Pits (3) liegt, zur Lichtstrahlfleck-Abtastrichtung parallel ist, wobei erste Winkel (ϑ₁) zwischen einer Pitbildungsebene (1a) des Substrats (1) einerseits und einer Vorderwandoberfläche (5a) bzw. einer Rückwandoberfläche (5b) der einzelnen Pits (3) andererseits liegen und zweite Winkel (ϑ₂) zwischen jeder der gegenüberliegenden Seitenwandoberflächen (5c) an einem Mittelabschnitt (3c) der in Lichtstrahlfleck-Abtastrichtung sich erstreckenden einzelnen Pits (3) und der Pitbildungsebene (1a) liegen,
dadurch gekennzeichnet,
daß die ersten Winkel (ϑ₁) größer als die zweiten Winkel (ϑ₂) sind.

2. Optisches Informationsaufzeichnungsmedium nach Anspruch 1,
dadurch gekennzeichnet,
daß der erste Winkel (ϑ₁), der zwischen der Vorderwandoberfläche (5a) der einzelnen Pits (3) und der Pitbildungsebene (1a) des Substrats (1) bzw. zwischen der Rückwandoberfläche (5b) der einzelnen Pits (3) und der Pitbildungsebene (1a) des Substrats (1) liegt, im Bereich von 60 bis 90° liegt.

## Revendications

1. Support d'enregistrement d'informations optiques comprenant un substrat (1) sur une des faces duquel est formé un ensemble (2) de microcuvettes comprenant des microcuvettes individuelles (3) arrangées en fonction d'un signal d'enregistrement pour reproduire ledit signal d'enregistrement par irradiation d'un spot de faisceau lumineux sur lesdites microcuvettes, l'axe passant par le centre du bord avant (4a) et par le centre du bord arrière (4b) desdites microcuvettes individuelles (3) étant parallèle à la direction de balayage du spot de faisceau lumineux, des premiers angles (ϑ₁) étant respectivement inclus entre le plan (1a) de formation de microcuvettes dudit substrat (1) d'une part, ou la surface de paroi avant (5a) et la surface de paroi arrière (5b) de microcuvettes individuelles (3) d'autre part, et des seconds angles (ϑ₂) étant inclus entre chacune des surfaces (5c) de paroi latérales opposées desdites microcuvettes, dans une partie centrale (3c) desdites microcuvettes individuelles (3) s'étendant dans la direction de balayage du spot du faisceau lumineux, et ledit plan (1a) de formation de microcuvettes, caractérisé en ce que lesdits premiers angles (ϑ₁) sont plus grands que lesdits seconds angles (ϑ₂).

2. Support d'enregistrement d'informations optiques selon la revendication 1, caractérisé en ce que lesdits premiers angles (ϑ₁), inclus entre la surface (5a) de paroi avant desdites microcuvettes individuelles (3) et ledit plan (1a) de formation de microcuvettes dudit substrat (1) et inclus entre ladite surface (5b) de paroi arrière desdites microcuvettes individuelles (3) et ledit plan (1a) de formation de micro-cuvettes dudit substrat (1) sont compris entre 60 et 90°.
